# EUROPEAN PATENT APPLICATION

(11) **EP 2 348 411 A2**
(43) Date of publication of application: **27.07.2011**
(21) Application number: 11151986.4
(22) Date of filing: 25.01.2011
(51) Int. Cl.: G06F 9/54

(54) **Information-processing apparatus, information-processing method, and program**

(30) Priority: 26.01.2010 JP 2010013999
(71) Applicant: NTT DoCoMo, Inc., Tokyo 100-6150 (JP)
(72) Inventor: Ohta, Ken, Tokyo 100-6150 (JP); Noda, Chie, Tokyo 100-6150 (JP); Inamura, Hiroshi, Tokyo 100-6150 (JP)
(74) Representative: HOFFMANN EITLE

(57) **Abstract**

An information-processing apparatus comprises: an environment storage means that stores a set of instructions for implementing a plurality of runtime environments including a first runtime environment and a second runtime environment; an execution means that executes the set of instructions stored in the environment storage means; a status-holding means that stores an item(s) of status information to be transmitted from the first runtime environment to the second runtime environment; a timing storage means that stores a condition relating to a status of execution of one of the first runtime environment and the second runtime environment; and a transmission means that transmits the item(s) of status information stored in the status-holding means to the second runtime environment in a case where the condition stored in the timing storage means is fulfilled.

## Description

### Cross-reference to Related Applications

This application is based on and claims priority under 35 U.S.C. 119 from Japanese Patent Application No. 2010-013999, which was filed on January 26, 2010.

### Background

### Technical Field

The present invention relates to communication between two runtime environments.

### Related Art

A technology for transferring data between two runtime environments virtualized on a single information-processing apparatus is known. For example, JP2009-116561A discloses transmitting/receiving data between virtual machines in an information-processing apparatus having a multi-core CPU or multiple processors. JP2002-351854A discloses transmitting/receiving data via a DPRAM between a host system and a sub-system (virtual machine). JP3-65734A discloses transmitting/receiving messages between two virtual machines. JP2008-299791A discloses performing a process such as copying of data between virtual machines (VMs).

Summary

When a status indicating arrival of emails, a status indicating setting of an information-processing apparatus (e.g., a silent mode), or the like is communicated between runtime environments, if the communication is conducted frequently, a processing load is caused to increase, and this can lead to a deterioration in response and/or an increase in power consumption. On the other hand, if the communication is performed only when the runtime environment is switched, an amount of processing performed at the time of switching is caused to increase, which may lead to a deterioration in switching speed.
To address such problems, the present invention provides a technology for communicating status information efficiently between runtime environments.

In one aspect of the present invention, there is provided an information-processing apparatus comprising: an environment storage means that stores a set of instructions for implementing a plurality of runtime environments including a first runtime environment and a second runtime environment; an execution means that executes the set of instructions stored in the environment storage means, with a status of execution of one of the plurality of runtime environments being a foreground status and a status of execution of each of the other runtime environment(s) being a background status; a status-holding means that stores an item(s) of status information to be transmitted from the first runtime environment to the second runtime environment; a timing storage means that stores a condition relating to a status of execution of a target runtime environment, which is one of the first runtime environment and the second runtime environment; and a transmission means that transmits the item(s) of status information stored in the status-holding means to the second runtime environment in a case where the condition stored in the timing storage means is fulfilled.
In such an information-processing apparatus, it is possible to communicate status information more efficiently than in a configuration in which the status information is transmitted, irrespective of a condition relating to a status of execution of a target runtime environment.

In a preferred embodiment, the target runtime environment may be the first runtime environment, and the condition may include a condition that the status of execution of the target runtime environment is the background status or has switched from the foreground status to the background status.
In this information-processing apparatus, a frequency of communicating status information can be reduced as compared to a configuration in which the status information is transmitted, irrespective of a condition relating to a status of execution of a target runtime environment.

In another preferred embodiment, the information-processing apparatus may further comprise: a reception means that receives the item(s) of status information from the first runtime environment; and an output means that outputs the item(s) of status information received by the reception means.

In yet another preferred embodiment, the information-processing apparatus may further comprise a status information-using means that uses the item(s) of status information output from the output means.

In yet another preferred embodiment, it is possible that each of the item(s) of status information is classified into one of a plurality of types, the target runtime environment is the first runtime environment, the timing storage means stores information representing a degree of priority for each of the plurality of types, and the condition includes a condition that, with respect to a type whose degree of priority is high, the item(s) of status information is transmitted irrespective of the status of execution of the target runtime environment, and with respect to a type whose degree of priority is low, the item(s) of status information is transmitted when the status of execution of the target runtime environment is the background status or has switched from the foreground status to the background status.

In yet another preferred embodiment, it is possible that the status-holding means stores a plurality of data sets, each of the plurality of data sets includes an item of status information and a flag corresponding to the item of status information, upon input of a new item of status information, the status-holding means writes the new item of status information to the data sets, after writing of the new item of status information to the data sets, the status-holding means rewrites a flag corresponding to the written item of status information to indicate that the item of status information has not been transmitted yet, when performing the transmission, the transmission means extracts, from among the item(s) of status information stored in the status-holding means, an item(s) of status information whose corresponding flag indicates that the item of status information has not been transmitted yet, and transmits the extracted item(s) of status information, and the status-holding means rewrites the flag corresponding to each of the item(s) of status information transmitted by the transmission means such that the flag indicates that the corresponding item of status information has been transmitted.

In yet another preferred embodiment, it is possible that each of the item(s) of status information is classified into one of a plurality of statuses including an information presentation status relating to information presentation, the target runtime environment is the first runtime environment, and the condition includes a condition that in a case where any of the item(s) of status information relates to the information presentation status, transmission of the item of status information is not performed when the status of execution of the target runtime environment is the foreground status, and transmission of the item of status information is performed when the status of execution of the target runtime environment is the background status or has switched from the foreground status to the background status.

In yet another preferred embodiment, it is possible that the plurality of statuses may includes a setting status that relates to setting of the information-processing apparatus, and the condition includes a condition that in a case where any of the item(s) of status information relates to the setting status, the item of status information is transmitted irrespective of the status of execution of the target runtime environment.

In yet another preferred embodiment, it is possible that each of the plurality of data sets further includes a status type that represents a type of each item of status information, and upon input of a new item of status information, the status-holding means compares the new item of status information with one of the item(s) of status information included in the plurality of data sets that corresponds to the same status type as that of the new item of status information, and when the compared items of status information are different, overwrites the item of status information included in the data set with the new item of status information and rewrites a flag corresponding to the rewritten item of status information to indicate that the corresponding item of status information is not transmitted yet.
In this information-processing apparatus, a frequency of communication can be reduced as compared to a configuration in which comparison between the new item of status information and an already stored item of status information is not performed.

In yet another preferred embodiment, the target runtime environment may be the first runtime environment, and the condition may include a condition that transmission of the item(s) of status information is performed after the status of execution of the target runtime environment has switched from the foreground status to the background status.
In this information-processing apparatus, a period of time required to make operable a runtime environment that is to be in the foreground status can be reduced as compared to a configuration in which transmission of the item(s) of status information is performed before the switching to the background status is completed.

In yet another preferred embodiment, the condition may include a condition that transmission of the item(s) of status information is performed when an amount of the item(s) of status information stored in the status-holding means exceeds a threshold value.

In yet another preferred embodiment, the condition may include a condition that, when one item of status information is transmitted, another item of status information is transmitted.

In yet another preferred embodiment, the transmission means may transmit the item(s) of status information in response to a request from the second runtime environment or another device.

In yet another preferred embodiment, it is possible that the status-holding means stores a plurality of data sets, each of the plurality of data sets includes an item of status information and a status type representing a type of the item of status information, the apparatus includes an access limitation management means that stores a policy indicating, for each of the status types, whether to permit reception of a corresponding item of status information, and the reception means processes the item(s) of status information according to the policy stored in the access limitation management means.
In this information-processing apparatus, security can be improved as compared to a case where an access limitation management means is not used.

In yet another preferred embodiment, it is possible that the status-holding means stores a plurality of data sets, each of the plurality of data sets includes an item of status information and a status type representing a type of the item of status information, the apparatus includes an access limitation management means that stores a policy indicating, for each of the status types, whether to permit use of a corresponding item of status information, and the status information-using means processes the item(s) of status information according to the policy stored in the access limitation management means.

In yet another preferred embodiment, it is possible that the status-holding means stores a plurality of data sets, each of the plurality of data sets includes an item of status information and a status type representing a type of the item of status information, the apparatus includes an access limitation management means that stores a policy indicating, for each of the status types, whether to permit transmission of a corresponding item of status information, and the transmission means processes the item(s) of status information according to the policy stored in the access limitation management means.

In yet another preferred embodiment, the apparatus may further comprise an access limitation management means that stores a policy including, for each of the plurality of runtime environments other than the first runtime environment, first information indicating whether the runtime environment is secure or non-secure as compared to the first runtime environment, and second information indicating that transmission of an item of status information from the first runtime environment to a runtime environment that is indicated by the first information as being non-secure is prohibited, wherein the transmission means processes the item(s) of status information according to the policy stored in the access limitation management means.

In yet another preferred embodiment, the access limitation management means may rewrite the policy in response to a request from a runtime environment other than the first runtime environment or another device.

In yet another preferred embodiment, it is possible that the policy includes, for each of the plurality of runtime environments other than the first runtime environment, information indicating whether the runtime environment is secure or non-secure as compared to the first runtime environment, and the access limitation means rewrites the policy only when a source of transmission of the request is a runtime environment that is secure.

In yet another preferred embodiment, it is possible that the first runtime environment is less secure than the second runtime environment, a first status communication device including the status-holding means, the timing storage means, and the transmission means operates in the first runtime environment, the item(s) of status information transmitted by the transmission means relates to setting of the information-processing apparatus, a second status communication device operates in the second runtime environment, and the second status communication device includes a second reception means that receives the item(s) of status information transmitted from the first runtime environment and a second output means that outputs the item(s) of status information received by the second reception means to a program that makes the setting in the second runtime environment.

In yet another preferred embodiment, it is possible that the second status communication device includes an inspection means that inspects the item(s) of status information received by the second reception means, and the second output means outputs item(s) of status information that has passed the inspection performed by the inspection means.

Further, according to another aspect of the present invention, there is provided an information-processing method performed in an information-processing apparatus comprising: a storage means that stores a set of instructions for implementing a plurality of runtime environments including a first runtime environment and a second runtime environment and a condition relating to a status of execution of a target runtime environment, which is one of the first runtime environment and the second runtime environment; and an execution means that executes the set of instructions stored in the storage means, with a status of execution of one of the plurality of runtime environments being a foreground status and a status of execution of each of the other runtime environment(s) being a background status, the method comprising the steps of: causing, by the execution means, the storage means to store an item of status information to be transmitted from the first runtime environment to the second runtime environment; and transmitting, by the execution means, the item of status information stored in the storage means to the second runtime environment in a case where the condition stored in the storage means is fulfilled.

In a preferred embodiment, it is possible that the first runtime environment is less secure than the second runtime environment, the step of causing the storage means to store an item of status information and the step of transmitting the item of status information are performed in the first runtime environment, and the item of status information to be transmitted relates to setting of the information-processing apparatus, the method further comprising the steps of: receiving, by the execution means executing the second runtime environment, the item of status information transmitted from the first runtime environment; outputting, by the execution means executing the second runtime environment, the received item of status information to a program that makes the setting in the second runtime environment.

### Brief Description of the Drawings

Exemplary embodiments of the present invention will now be described in detail with reference to the following figures, wherein:
FIG. 1 is a diagram showing a functional configuration of information-processing apparatus 1 according to one embodiment;
FIG. 2 is a diagram showing an example of information stored in status-holding unit 121;
FIG. 3 is a diagram showing an example of information stored in timing storage unit 122;
FIG. 4 is a diagram showing an example of information stored in status output unit 125;
FIG. 5 is a diagram showing an example of a policy relating to access limitation;
FIG. 6 is a diagram showing a hardware configuration of information-processing apparatus 1;
FIG 7 is a flowchart showing a process performed when new status information is input;
FIG. 8 is a flowchart showing a process performed when a status of execution is switched;
FIG. 9 is a flowchart showing a process performed when status information is requested;
FIG. 10 is a flowchart showing a process of access limitation;
FIG. 11 is a flowchart showing a process of use limitation of status information;
FIG. 12 is a flowchart showing a process of change of setting performed in a secure runtime environment;
FIGS. 13A and 13B are diagrams showing a transition of a screen in Operation Example 2;
FIG. 14 is a diagram showing a functional configuration of information-processing apparatus 1 according to Modification 1; and
FIG. 15 is a diagram showing a functional configuration of information-processing apparatus 1 according to Modification 2.

### Detailed Description

### 1. Configuration

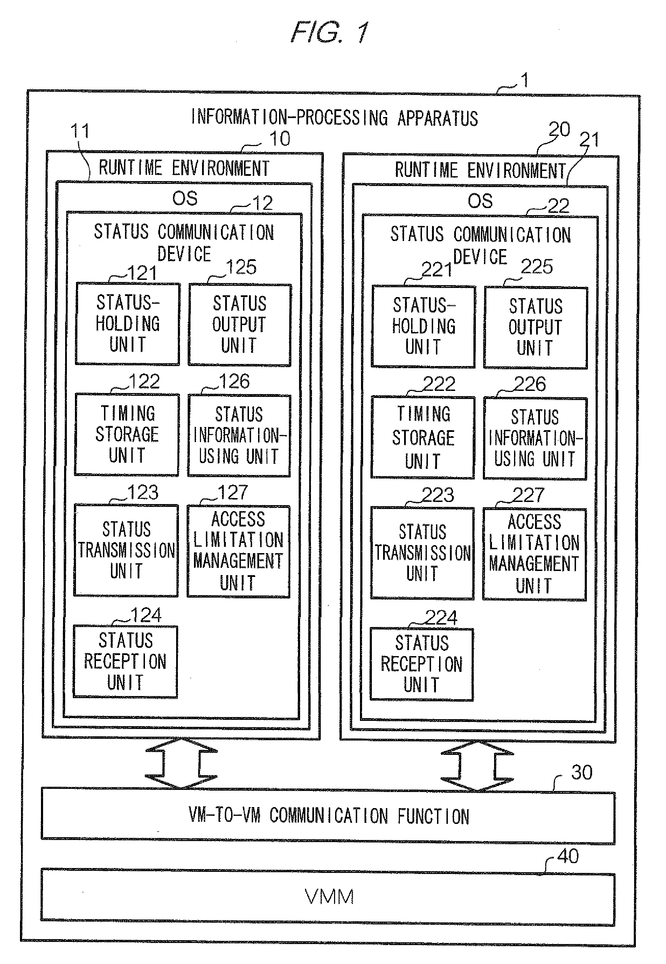

FIG. 1 is a diagram showing a functional configuration of information-processing apparatus 1 according to one embodiment of the present invention. In this example, information-processing apparatus 1 is a so-called smartphone. Information-processing apparatus 1 includes runtime environment 10 (an example of a first runtime environment), runtime environment 20 (an example of a second runtime environment), VM(Virtual Machine)-to-VM communication function 30, and VMM (Virtual Machine Monitor) 40. Runtime environment 10 and runtime environment 20 each are implemented on a virtual machine. In runtime environment 10 and runtime environment 20 run OS (Operating System) 11 and OS 21, respectively. It is to be noted here that a "runtime environment" is a program based on which a program of a certain kind is executed, or refers to a function implemented by such a program.

VMM 40 is a function of operating multiple runtime environments (or a program for implementing this function). Under control of VMM 40, runtime environment 10 and runtime environment 20 include mutually independent OS's and drivers. VM-to-VM communication function 30 is a function for communication between runtime environments (or a program for implementing this function).

In this example, runtime environment 10 and runtime environment 20 are executed such that one of them has a foreground status and the other has a background status. The "foreground status" is a status in which information input by a user is accepted, and the "background status" is a status different from the foreground status; namely, a status in which information input by a user is not accepted. A status of execution of a runtime environment (i.e., the foreground status or the background status) is switched in response to one of certain events. For example, this event is an operation of a button performed by a user or a system event such as message arrival or the like.

Runtime environment 10 includes status communication device 12. Status communication device 12 functions to communicate information relating to a status (hereinafter, "status information") between runtime environment 10 and runtime environment 20. The "status" represented by the status information will be described later. Functions of status communication device 12 are implemented by a program running under OS 11. Status communication device 12 includes status-holding unit 121, timing storage unit 122, status transmission unit 123, status reception unit 124, status output unit 125, status information-using unit 126, and access limitation management unit 127.

Status-holding unit 121 (an example of a status-holding means) stores the status information. In this example, the status information includes information on a status relating to presentation of information to a user (hereinafter, "information presentation status") and information on a status relating to setting of information-processing apparatus 1 (hereinafter, "setting status"). The information presentation status is, for example, a status in which an email, an SMS, a telephone call, or the like has been received (message arrival), a status in which new information provided by a push-type information distribution service has been received, or a status in which a process such as downloading of a file has been completed. The setting status is, for example, a status in which information-processing apparatus 1 is in a silent mode, a status in which operation of information-processing apparatus 1 is locked (local lock, remote lock, or the like), or a status relating to setting of a network service (voice mail service, call waiting service, or the like).

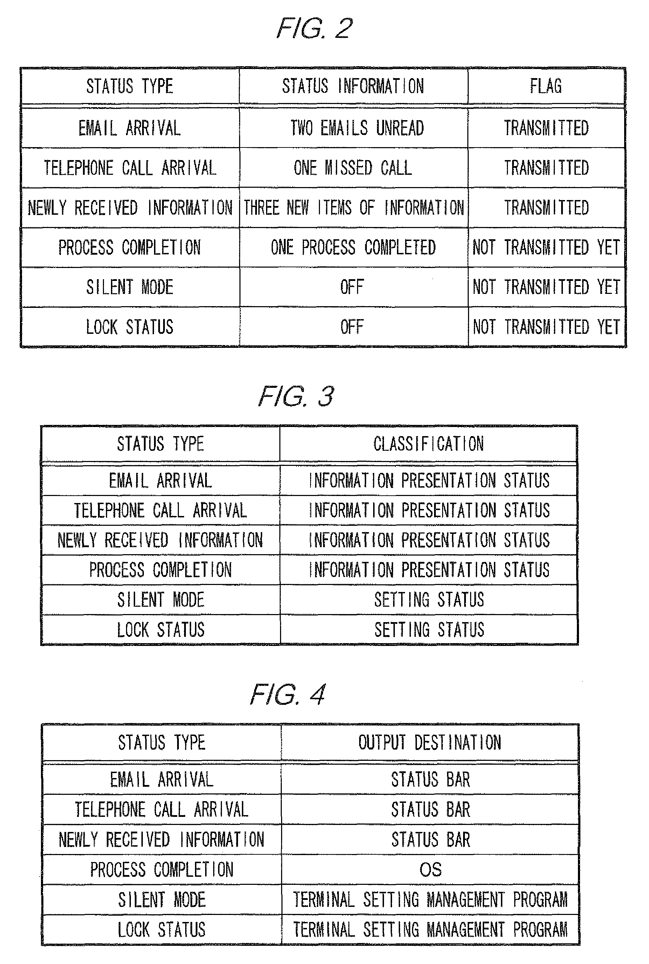

FIG. 2 is a diagram showing an example of information stored in status-holding unit 121. Status-holding unit 121 stores a plurality of sets of data. Each set of data includes a status type, status information, and a flag. The status type is information indicating a type of a status. In this example, "email arrival," "telephone call arrival," "newly received information," "process completion," "silent mode," and "lock status" are stored as the status type. The flag indicates whether the status information has been transmitted. In the example shown in FIG 2, it is indicated with regard to the status type "email arrival" that the status information represents "two emails unread" and that this status information "has been transmitted."

With reference to FIG. 1 again, timing storage unit 122 (an example of a timing storage means) stores information indicating a condition specifying a timing at which the status information is to be transmitted. This condition is set for each classification of status information, for example.

FIG. 3 is a diagram showing an example of information stored in timing storage unit 122. Timing storage unit 122 stores a plurality of sets of data. Each set of data includes a status type and a classification. In the example shown in FIG. 3, it is indicated that the status types "email arrival," "telephone call arrival," "newly received information," and "process completion" belong to the classification "information presentation status," while the status types "manner mode" and "lock status" belong to the classification "setting status." Status information relating to the setting status is transmitted irrespective of a status of execution of a runtime environment of a transmission source (in this case, runtime environment 10). That is, status information relating to the setting status is transmitted immediately in each of the cases where the runtime environment of the transmission source is in the foreground status and where the runtime environment of the transmission source is in the background status. Status information relating to the information presentation status is transmitted when the status of execution of the runtime environment of the transmission source is in the background status or when switching is made from the foreground status to the background status. Thus, when the runtime environment of the transmission source is in the foreground status, status information relating to the information presentation status is not transmitted.

With reference to FIG. 1 again, status transmission unit 123 (an example of a transmission means) transmits the status information to runtime environment 20 in accordance with the status of execution of at least one of runtime environment 10 and runtime environment 20, and with the conditions stored in timing storage unit 122. In communication of information between runtime environment 10 and runtime environment 20, VM-to-VM communication function 30 is used. Also, status transmission unit 123 acquires the status of execution of at least one of runtime environment 10 and runtime environment 20. In this example, status transmission unit 123 acquires the status of execution of runtime environment 10 from VMM 40. VMM 40 manages the status of execution of each of runtime environment 10 and runtime environment 20, and has information specifying the runtime environment in the foreground status and the runtime environment in the background status. Further, status transmission unit 123 transmits the status information and the status type to the runtime environment of the transmission destination when the condition set forth in timing storage unit 122 is fulfilled.

Status reception unit 124 (an example of a reception means) receives the status information from another runtime environment such as runtime environment 20 via VM-to-VM communication function 30. Further, status reception unit 124 verifies whether the received status information is authentic. The verification is performed by use of CRC (Cyclic Redundancy Check), MAC (Message Authentication Code), or electronic signature, for example. Furthermore, status reception unit 124 refers to a policy owned by access limitation management unit 127 (described later), and limits the reception of status information based on the policy.

Status output unit 125 (an example of an output means) outputs the received status information to a functional element that uses the status information. The "functional element that uses the status information" is, for example, a program running in runtime environment 10, such as an application program, middleware, an OS, a device driver, and so on. In this example, status output unit 125 stores information specifying correspondence between each item of status information and a functional element to which the information is output.

FIG. 4 is a diagram showing an example of information stored in status output unit 125. Status output unit 125 stores a plurality of sets of data. Each set of data includes a status type and a function to which information is output. In this example, the status type "email arrival," for example, is associated with "status bar." Thus, when the status type of received status information is "email arrival," status output unit 125 outputs the received information to the program "status bar."

Explanation will be continued with reference to FIG. 1 again. Status information-using unit 126 (an example of a using means) uses the status information. Status information-using unit 126 displays status information relating to the information presentation status, or sets information-processing apparatus 1 in accordance with status information relating to the setting status. Status information-using unit 126 may be a destination of output of the status information set forth by status output unit 125.
Access limitation management unit 127 (an access limitation management means) stores a policy relating to access limitation of the status information.

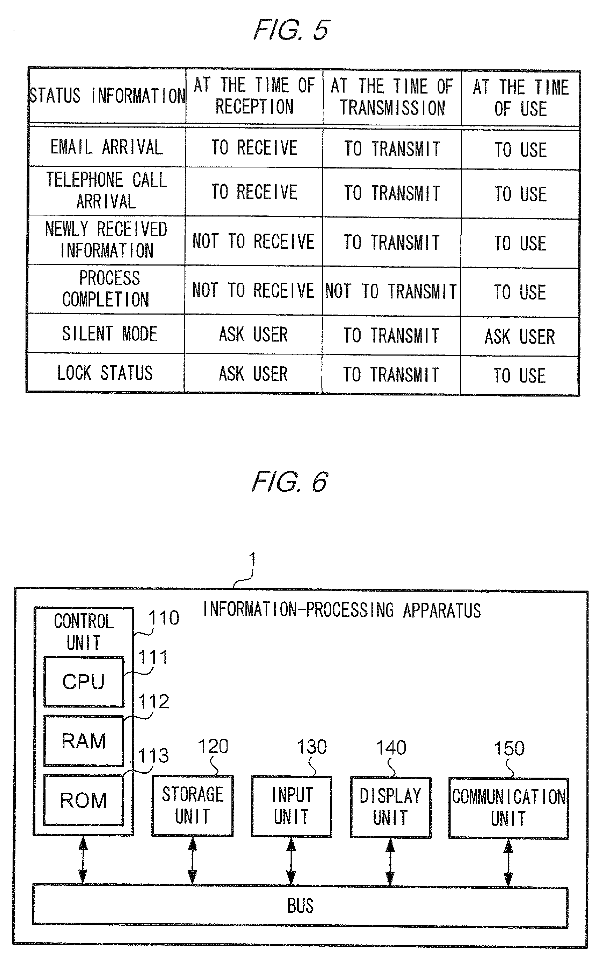

FIG. 5 is a diagram showing an example of a policy relating to the access limitation. The policy includes a plurality of sets of data. Each set of data includes a status type and content of access limitation. In the example shown in FIG. 5, the access limitation includes access limitation at the time of reception and access limitation at the time of transmission. The content of access limitation includes "to receive," "not to receive," "to transmit," "not to transmit," and "ask user." For example, with regard to the status type "newly received information," "not to receive" is set as the access limitation at the time of reception and "to transmit" is set as the access limitation at the time of transmission. With regard to the status type "lock status," "ask user" is set as the access limitation at the time of reception and "to transmit" is set as the access limitation at the time of transmission. It is to be noted that "ask user" means issuing a query to a user on whether reception/transmission is permitted.

The policy of access limitation is changed in response to a request by another program or device. For example, the request for a change in the policy is transmitted from an application program or middleware running in runtime environment 10, another runtime environment such as runtime environment 20, a module managing the system such as VMM 40, or a device other than information-processing apparatus 1 such as a server connected to a mobile communication network or the Internet. Access limitation management unit 127 changes the policy in response to a request from these programs and devices.

Explanation will be continued with reference to FIG. 1 again. Runtime environment 20 includes status communication device 22. Status communication device 22 functions to communicate status information between runtime environment 10 and runtime environment 20. Functions of status communication device 22 are implemented by a program running in OS 21. Status communication device 22 includes status-holding unit 221, timing storage unit 222, status transmission unit 223, status reception unit 224, status output unit 225, status information-using unit 226, and access limitation management unit 227. The functions of these units are the same as those in status communication device 12.

FIG. 6 is a diagram showing a hardware configuration of information-processing apparatus 1. Information-processing apparatus 1 includes control unit 110, storage unit 120, input unit 130, display unit 140, and communication unit 150. Control unit 110 controls the configuration elements of information-processing apparatus 1. Control unit 110 includes a CPU (Central Processing Unit) 111, a RAM (Random Access Memory) 112, and a ROM (Read Only Memory) 113. CPU 111 is a unit that performs a variety of operations. RAM 112 is a storage device that serves as a work area when CPU 111 executes a program. ROM 113 is a storage device that stores a program and data. Storage unit 120 includes a non-volatile storage device such as a built-in flash memory, an HDD (Hard Disk Drive), a detachable memory card, or the like. Storage unit 120 stores a variety of programs including basic programs such as OS 11, OS 21, or the like, an application program(s) running on these operating systems, programs for implementing VM-to-VM communication function 30 and VMM 40, and so on, together with a variety of data. The functions shown in FIG. 1 are realized by execution of programs stored in storage unit 120 by control unit 110. The function of storing information, such as that performed by status-holding unit 121, timing storage unit 122, status output unit 125, access limitation unit 127, and so on, secures a storage area in RAM 111 or storage unit 120, and stores the information in this storage area.

Input unit 130 inputs information to control unit 110. Input unit 130 includes an input device(s) such as a ten-key pad, a keypad, buttons, a touchpad, a touch panel, or the like. Display unit 140 displays information, and includes a display such as an LCD (Liquid Crystal Display), an EL display, or the like. Communication unit 150 conducts communication via a mobile communication network. Communication unit 150 includes an antenna and a transmission/reception device such as an amplifier, or the like.

In this example, RAM 112, ROM 113, or storage unit 120 is an example of a storage means or an environment storage means in which a set of instructions for implementing a plurality of runtime environments is stored. CPU 111 is an example of an execution means that executes the set of instructions.

### 2. Operation

### 2-1. Transmission of status information

Next, explanation will be given of an operation of status communication device 12. Here, explanation will be given taking as an example a case where runtime environment 10 is a runtime environment of the transmission source and runtime environment 20 is a runtime environment of the transmission destination. In response to a certain event, status communication device 12 transmits the status information stored in status-holding unit 121 to runtime environment 20. The events that trigger the transmission include (1) input of new status information, (2) switching of the status of execution of runtime environment 10 from the foreground status to the background status, and (3) a request for the status information. In the following description, explanation will be given of a transmission process triggered by each of these events (1)-(3).

### 2-1-1. Process when new status information is input

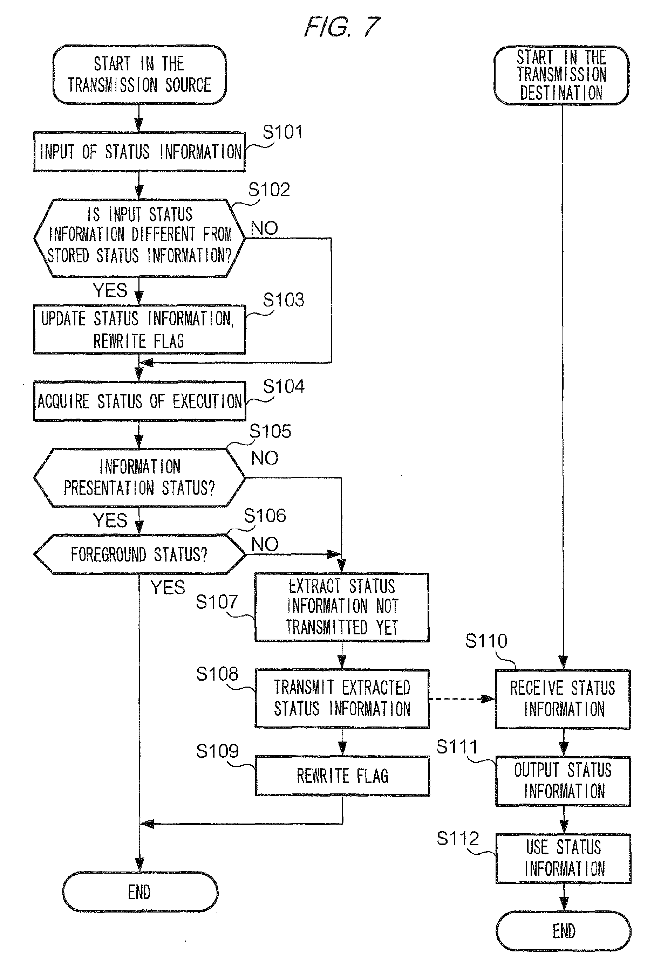

FIG. 7 is a flowchart showing a process performed when new status information is input. In the following description, the configuration elements of the status communication device are explained as acting to perform the process, and this means that the process is performed by execution by CPU 111 of the set of instructions (program module) for implementing the configuration elements so as to control the other hardware elements.

First, in runtime environment 10, which is the runtime environment of the transmission source, an item of status information is input to status-holding unit 121 (step S101). The item of status information is input from an application program, middleware, an OS, a device driver, or the like, that runs in runtime environment 10. In step S 1 02, status-holding unit 121 determines whether the input item of status information is different from any of the stored items of status information. If it is determined that the input item of status information is different from any of the stored items of status information (S102: YES), status-holding unit 121 causes the process to proceed to step S103. If it is determined that the input item of status information is the same as one of the stored items of status information (S102: NO), status-holding unit 121 causes the process to proceed to step S105.

In step S103, status-holding unit 121 updates the stored item of status information. That is, status-holding unit 121 overwrites the stored item of status information with the input item of status information. After updating of the status information, status-holding unit 121 rewrites the flag corresponding to the updated item of status information to indicate "not transmitted yet."

In step S104, status transmission unit 123 acquires a status of execution of the runtime environment of the transmission source (in this example, runtime environment 10).
In step S105 and step S106, status transmission unit 123 determines whether to transmit the input item of status information immediately. In this example, status transmission unit 123 transmits the item of status information in a case where the item of status information does not belong to the information presentation status or in a case where the runtime environment of the transmission source is not in the foreground status, as will be described concretely below. Status transmission unit 123 determines whether the condition stored in timing storage unit 122 is fulfilled with regard to the item of status information input in step S101. Specifically, in step S105, status transmission unit 123 determines whether the input item of status information belongs to the information presentation status. If it is determined that the input item of status information belongs to the information presentation status (S 105: YES), status transmission unit 123 causes the process to proceed to step S106. If it is determined that the input item of status information does not belong to the information presentation status, i.e., the input item of status information belongs to the setting status (S105: NO), status transmission unit 123 causes the process to proceed to step S107. Further, in step S106, status transmission unit 123 determines whether the status of execution of the runtime environment of the transmission source is the foreground status. If it is determined that the status of execution of the runtime environment of the transmission source is the foreground status (S106: YES), status transmission unit 123 terminates the process shown in FIG. 7. If it is determined that the status of execution of the runtime environment of the transmission source is not the foreground status, i.e., the status of execution of the runtime environment of the transmission source is the background status (S106: NO), status transmission unit 123 causes the process to proceed to step 5107.

In step S 107, status transmission unit 123 extracts an item(s) of status information whose flag represents "not transmitted yet." In step S 108, status transmission unit 123 transmits the extracted item(s) of status information to the runtime environment of the transmission destination (in this example, runtime environment 20). In step S109, status transmission unit 123 accesses status-holding unit 121, and rewrites the flag corresponding to each transmitted item of status information, so that the flag represents "transmitted." In this case, when status communication device 12 receives a reply indicating a transmission error, status transmission unit 123 accesses status-holding unit 121 and rewrites the flag corresponding to the item of status information for which the error has occurred, so that the flag represents "not transmitted yet." After rewriting of the flag is completed, status communication device 12 terminates the process shown in FIG 7.

In runtime environment 20, which is the runtime environment of the transmission destination, status reception unit 224 receives the item(s) of status information from runtime environment 10 (step S110). In step S111, status output unit 225 outputs the received item(s) of status information to the function(s) using the item(s) of status information. In this example, the item(s) of status information is output to status information-using unit 226. In step S 112, status information-using unit 226 uses the received item(s) of status information. After use of the item(s) of status information, status communication device 22 terminates the process shown in FIG. 7.

### 2-1-2. When a status of execution is switched

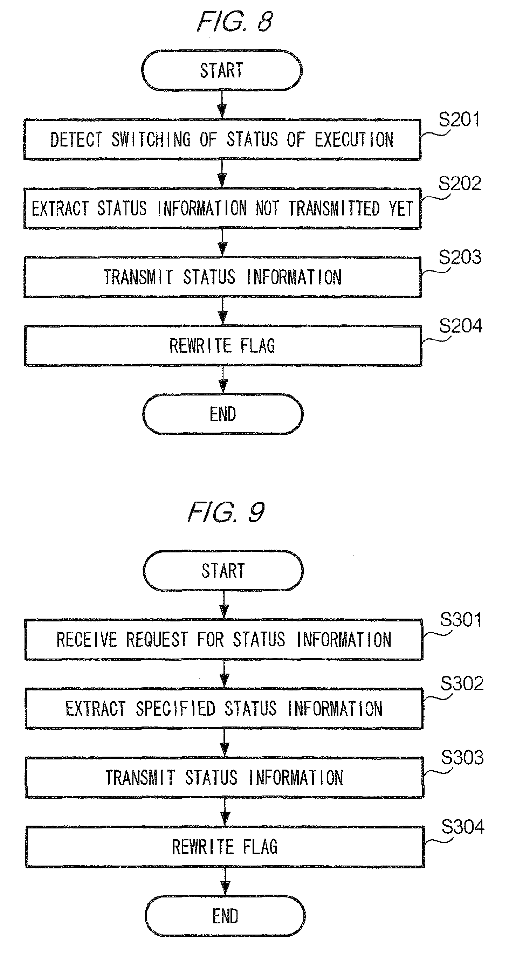

FIG. 8 is a flowchart showing a process performed when a status of execution is switched. In this example, it is assumed that runtime environment 10 is in the foreground status and runtime environment 20 is in the background status prior to the start of the flow shown in FIG. 8. The process shown in FIG 8 is performed in response to generation of a trigger for switching of a status of execution (such as an operation of a button(s) by a user, or a system event).

In step S201, status transmission unit 123 detects that switching of the status of execution of the runtime environment of the transmission source from the foreground status to the background status is completed. In this example, VMM 40 manages the status of execution of each of runtime environment 10 and runtime environment 20. VMM 40 switches the status of execution of runtime environment 10 from the foreground status to the background status. When the switching is completed, VMM 40 notifies the runtime environments under its control (runtime environment 10 and (runtime environment 20) of the completion of the switching. Status transmission unit 123 detects that the status of execution of runtime environment 10 has been switched from the foreground status to the background status based on the notification from VMM 40.

In step S202, status transmission unit 123 extracts, from among the items of status information stored in status-holding unit 121, an item(s) of status information whose flag represents "not transmitted yet." In step S203, status transmission unit 123 transmits the extracted item(s) of status information. In step S204, status transmission unit 123 accesses status-holding unit 121, and rewrites the flag corresponding to each transmitted item of status information, so that the flag represents "transmitted." After rewriting of the flag, status communication device 12 terminates the process shown in FIG. 8.

### 2-1-3. When status information is requested

FIG. 9 is a flowchart showing a process performed when status information is requested. In step S301, status transmission unit 123 receives a request for an item of status information. This request is a request for transmission of the item of status information, and includes an identifier (e.g., a status type) that identifies the item of status information.

In step 5302, status transmission unit 123 extracts, from among the items of status information stored in status-holding unit 121, an item of status information corresponding to the status type identical with that included in the request. In step S303, status transmission unit 123 transmits the extracted item of status information to the runtime environment of the transmission source of the request. In step S304, status transmission unit 123 accesses status-holding unit 121, and rewrites the flag corresponding to the transmitted item of status information, so that the flag represents "transmitted." After rewriting of the flag, status communication device 12 terminates the process shown in FIG. 9.

### 2-2. Access limitation

In the foregoing description from 2-1-1 to 2-1-3, explanation of access limitation of status information is omitted. Thus, explanation will be given of the access limitation here. This explanation will be given taking as an example the process performed when the status of execution is switched as described in 2-1-2. However, the access limitation is performed similarly for the processes described in 2-1-1 and 2-1-3.

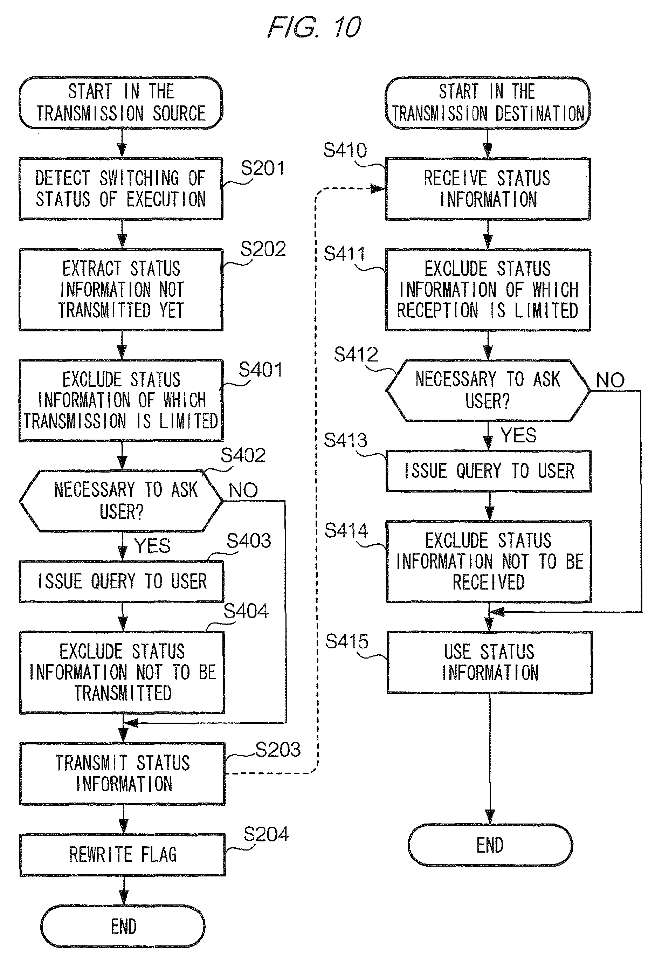

FIG.10 is a flowchart showing a process of the access limitation. In FIG. 10, the same reference numbers are used to denote the parts in common with FIG. 8. After the process in step S202 is completed, status transmission unit 123 excludes, from the extracted item(s) of status information, an item(s) of status information transmission of which is limited (step S401). Detailed explanation will be given below. Status transmission unit 123 transmits to access limitation management unit 127 a query on whether the transmission of the extracted item(s) of status information is permitted. This query includes a status type(s). Upon receipt of the query, access limitation management unit 127 extracts the status type(s) included in the query. Access limitation management unit 127 refers to the stored policy to extract a content of access limitation relating to each of the item(s) of status information corresponding to the extracted status type(s). Access limitation management unit 127 transmits the extracted content(s) of access limitation (in the example shown in FIG. 5, one of "to transmit," "not to transmit," and "ask user") to status transmission unit 123 as a response to the query. Status transmission unit 123 excludes, from the item(s) of status information to be transmitted, the item(s) of status information whose content of access limitation included in the received response is "not to transmit."

In step S402, status transmission unit 123 determines whether it is necessary to issue a query to a user, i.e., whether there is an item of information whose content of access information is "ask user." If it is determined that it is necessary to issue a query to a user (S402: YES), status transmission unit 123 causes the process to proceed to step S403. If it is determined that it is unnecessary to issue a query to a user (S402: NO), status transmission unit 123 causes the process to proceed to step S203.

In step S403, status transmission unit 123 issues a query to a user on whether transmission is permitted. Specifically, status transmission unit 123 displays a screen for allowing a user to input permission/prohibition of transmission with regard to each item of status information whose content of access limitation is "ask user." A user who views the screen operates input unit 130 to input permission/prohibition of transmission. In step S404, status transmission unit 123 excludes, from the item(s) of status information to be transmitted, the item(s) of status information for which the user inputs "not to transmit."
The process in step S203 and thereafter is the same as that described in the foregoing, except that the item(s) of status information excluded from the item(s) of status information to be transmitted in steps S401-S404 is not transmitted.

Next, explanation will be given of a process performed by status communication device 22, which operates on the runtime environment of the transmission destination. In step S410, status reception unit 224 receives an item(s) of status information from status communication device 12 (runtime environment 10).

In step S411, status reception unit 224 excludes, from the received item(s) of status information, an item(s) of status information of which reception is limited. Detailed explanation will be given below. Status reception unit 224 transmits to access limitation management unit 227 a query on whether the reception of the received item(s) of status information is permitted. This query includes a status type(s). Upon receipt of the query, access limitation management unit 227 extracts the status type(s) included in the query. Access limitation management unit 227 refers to the stored policy to extract a content of access limitation relating to each of the item(s) of status information corresponding to the extracted status type(s). Access limitation management unit 227 transmits the extracted content(s) of access limitation (in the example shown in FIG. 5, one of "to receive," "not to receive," and "ask user") to status reception unit 224 as a response to the query. Status reception unit 224 excludes or deletes, from the item(s) of status information received, the item(s) of status information whose content of access limitation included in the received response is "not to receive." With regard to the item(s) of status information excluded from the item(s) of status information received, status reception unit 224 returns an error message to the transmission source. Alternatively, status reception unit 224 does not have to return an error message to the transmission source.

In step S412, status reception unit 224 determines whether it is necessary to issue a query to a user, i.e., whether there is an item of information whose content of access information is "ask user." If it is determined that it is necessary to issue a query to a user (S422: YES), status reception unit 224 causes the process to proceed to step 5413. If it is determined that it is unnecessary to issue a query to a user (5412: NO), status reception unit 224 causes the process to proceed to step S415.

In step S413, status reception unit 224 issues a query to a user on whether reception is permitted. Specifically, status reception unit 224 displays a screen for allowing a user to input permission/prohibition of reception with regard to each item of status information whose content of access limitation is "ask user." A user who views the screen operates input unit 130 to input permission/prohibition of reception. In step S414, status reception unit 224 excludes or deletes, from the item(s) of status information received, the item(s) of status information for which the user inputs "not to receive."

In step S415, status output unit 225 outputs the received item(s) of status information to the functional element(s) using the item(s) of status information. The functional element(s) to which the item(s) of status information is input uses the item(s) of status information. After using of the item(s) of status information, status communication device 22 terminates the process shown in FIG. 10. With regard to the item(s) of status information received and output from status output unit 225, status reception unit 224 transmits an acknowledgment (ACK) to the runtime environment of the transmission source.

### 2-3 Use limitation

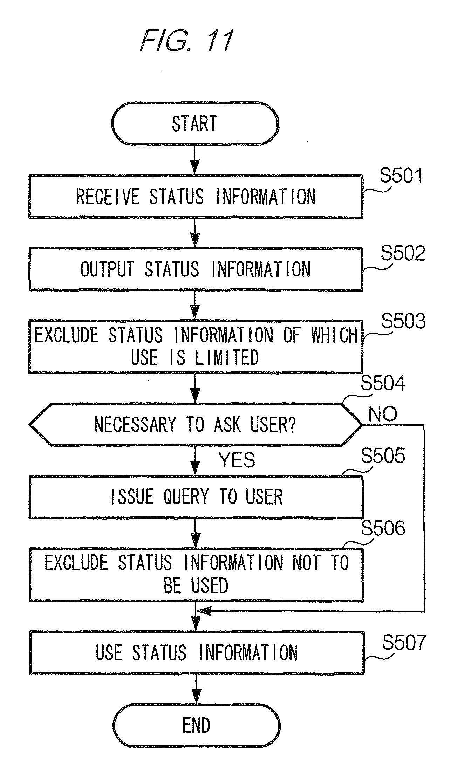

FIG. 11 is a flowchart showing use limitation of status information in the transmission destination (in this example, runtime environment 20). In step S501, status reception unit 224 receives an item(s) of status information from runtime environment 10. In step S502, status output unit 225 outputs the received item(s) of status information to status information-using unit 226.

In step S503, from the input items of status information, an item(s) of status information of which use is limited is excluded. Specifically, status information-using unit 226 transmits to access limitation management unit 227 a query on whether the use of the input item(s) of status information is permitted. This query includes a status type(s). Upon receipt of the query, access limitation management unit 227 extracts the status type(s) included in the query. Access limitation management unit 227 refers to the stored policy to extract content of access limitation relating to each of the item(s) of status information corresponding to the extracted status type(s). Access limitation management unit 227 transmits the extracted content(s) of access limitation (in the example shown in FIG. 5, one of "to use," "not to use," and "ask user") to status information-using unit 226 as a response to the query. Status information-using unit 226 excludes or deletes, from the item(s) of status information to be used, the item(s) of status information whose content of access limitation included in the received response is "not to use."

In step S504, status information-using unit 226 determines whether it is necessary to issue a query to a user, i.e., whether there is an item of information whose content of access limitation is "ask user." If it is determined that it is necessary to issue a query to a user (S504: YES), status information-using unit 226 causes the process to proceed to step 5505. If it is determined that it is unnecessary to issue a query to a user (S504: NO), status information-using unit 226 causes the process to proceed to step S507.

In step S505, status information-using unit 226 issues a query to a user on whether the use is permitted. Specifically, status information-using unit 226 displays a screen for allowing a user to input permission/prohibition of use with regard to each item of status information whose content of access limitation is "ask user." The user who views the screen operates input unit 130 to input permission/prohibition of use. In step S506, status information-using unit 226 excludes or deletes, from the item(s) of status information to be used, the item(s) of status information for which the user inputs "not to use."

In step S507, status information-using unit 226 uses the item(s) of status information. After use of the item(s) of status information, status communication device 22 terminates the process shown in FIG. 11.

### 2-4. Concrete examples of operation

In the following, concrete examples of operation will be explained. Here, explanation will be given of two concrete examples; namely, (1) change of setting of information-processing apparatus 1 in a secure runtime environment, and (2) display of email reception in a runtime environment in the background status.

### 2-4-1. Operation Example 1: Change of setting in a secure runtime environment

In this example, security levels of runtime environment 10 and runtime environment 20 are different. Runtime environment 10 is a non-secure runtime environment, while runtime environment 20 is a secure runtime environment. It is to be noted here that a "secure runtime environment" is a closed runtime environment that allows only trusted programs to run. A "non-secure runtime environment" is an open runtime environment that allows for execution or installation of a third-party program that may not be trusted. Explanation will be given here of an example in which status information relating to setting is transmitted from the non-secure runtime environment to the secure runtime environment, and change of setting of information-processing apparatus 1 is performed in the secure runtime environment. The terms "secure" and "non-secure" herein mean that, relative to each other, one of the runtime environments is more secure and the other is less secure.

In this example, a status type of interest is "lock status." Information-processing apparatus 1 is designed such that the setting relating to the lock status of information-processing apparatus 1 cannot be changed directly in runtime environment 10 for a security reason. That is, for a program running in runtime environment 10 to set the lock status, it is necessary to make a request to runtime environment 20. It is assumed here that runtime environment 10 is in the foreground status and runtime environment 20 is in the background status. Also, it is assumed that the lock status is "off," namely, the setting is made such that input from input unit 130 can be received. In runtime environment 10, an application program for changing the setting of the lock status (hereinafter, "lock status-changing application") is running.

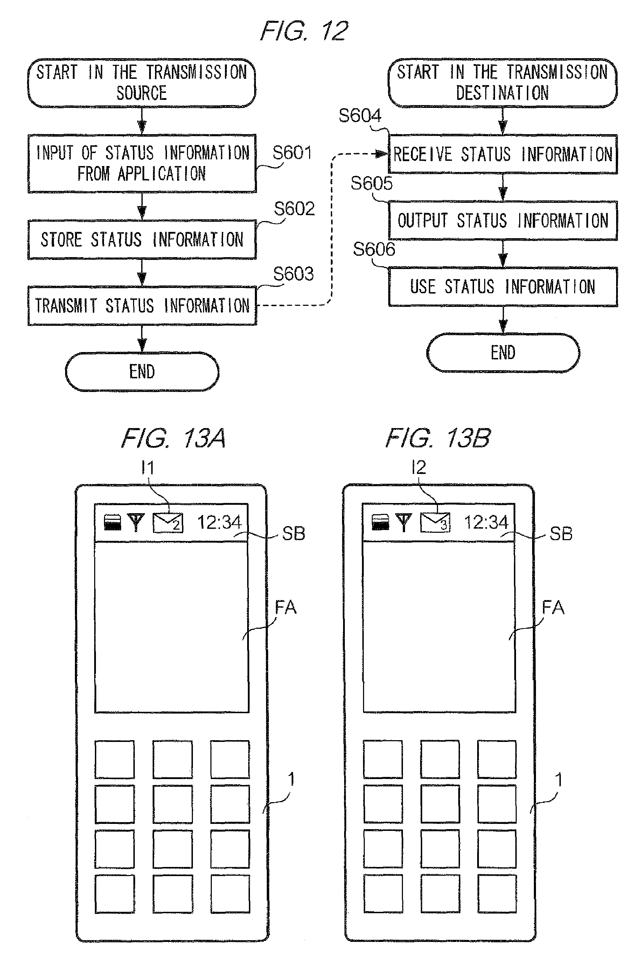

FIG. 12 is a flowchart showing a process of change of setting performed in a secure runtime environment. In this flowchart, processes for access limitation and the like are omitted for the sake of simplicity. In step 5601, the lock status-changing application calls status communication device 12, and inputs status information to make the lock status on. It is to be noted that because a change of the setting of information-processing apparatus 1 cannot be performed in runtime environment 10, the lock status-changing application is configured to call status communication device 12 and input status information to make the lock status on, instead of performing change of the setting.

In step S602, status-holding unit 121 stores the status information input by the lock status-changing application. In step S603, status transmission unit 123 transmits the input status information to runtime environment 20. After the transmission of the status information, status communication device 12 terminates the process shown in FIG. 12. During this process, runtime environment 10 remains in the foreground status.

In runtime environment 20, status reception unit 224 of status communication device 22 receives the status information from runtime environment 10 (step S604). In step S605, status output unit 225 outputs the received status information to status information-using unit 226. In step S606, status information-using unit 226 uses the status information output from status output unit 225. A concrete operation will be explained below. The status information is for making the lock status of information-processing apparatus 1 on. In runtime environment 20, a program for changing the lock status of information-processing apparatus 1 can run. Status output unit 225 calls this program to make the lock status on. During this process, runtime environment 20 remains in the background status. After use of the status information, status communication device 22 terminates the process shown in FIG. 12.

### 2-4-2. Operation Example 2: Display of email reception in a runtime environment in the background status

In this example, it is assumed that runtime environment 10 is in the background status and runtime environment 20 is in the foreground status. A status type of interest is "email arrival." In runtime environment 10, an application program for receiving an email (hereinafter, "mailer") is running.

Upon receipt of a new email, the mailer calls status communication device 12, and inputs status information that represents arrival of the new email (for example, "three emails unread"). Status-holding unit 121 stores the status information input by the mailer. Status transmission unit 123 transmits the input status information to runtime environment 20. During this process, runtime environment 10 remains in the background status.

In runtime environment 20, status reception unit 224 of status communication device 22 receives the status information from runtime environment 10. Status output unit 225 outputs the received status information to the program "status bar." The status bar is a program for displaying arrival of an email(s) on the screen.

FIGS. 13A and 13B are diagrams showing a transition of a screen in Operation Example 2. FIG. 13A shows a status prior to the transmission of the status information, and FIG. 13B shows a status after the transmission of the status information. The screen is divided into status bar SB and free area FA. Free area FA is a display area that can be used freely by any application program. Status bar SB is a display area in which information relating to predetermined parameters, such as a remaining battery charge, an intensity of the electromagnetic wave, the current time, and so on, is displayed. In this example, only a picture relating to the runtime environment in the foreground status is displayed in free area FA. Since runtime environment 20 is in the foreground status in this example, a picture relating to an application program running in runtime environment 20 is displayed in free area FA. However, in status bar SB, a status relating to the runtime environment in the background status (in this example, a number of unread emails) is displayed. Icon 11 is an image representing that there are two unread emails. Icon 12 is an image representing that there are three unread emails. A picture in status bar SB is updated in response to a change in runtime environment 10, while a picture relating to runtime environment 20 is displayed in free area FA.

### 3. Other embodiments

The present invention is not limited to the above embodiment, and a variety of modified embodiments are possible. In the following description, explanation will be given of some of such modifications. It is to be noted that two or more of the following modifications may be used in combination.

### 3-1. Modification 1

The relationship between a status communication device and a runtime environment is not limited to that described in the exemplary embodiment. A part or all of the functions of status communication device 12 may operate in a runtime environment other than the runtime environment of the transmission source (runtime environment 10) and the runtime environment of the transmission destination (runtime environment 20).

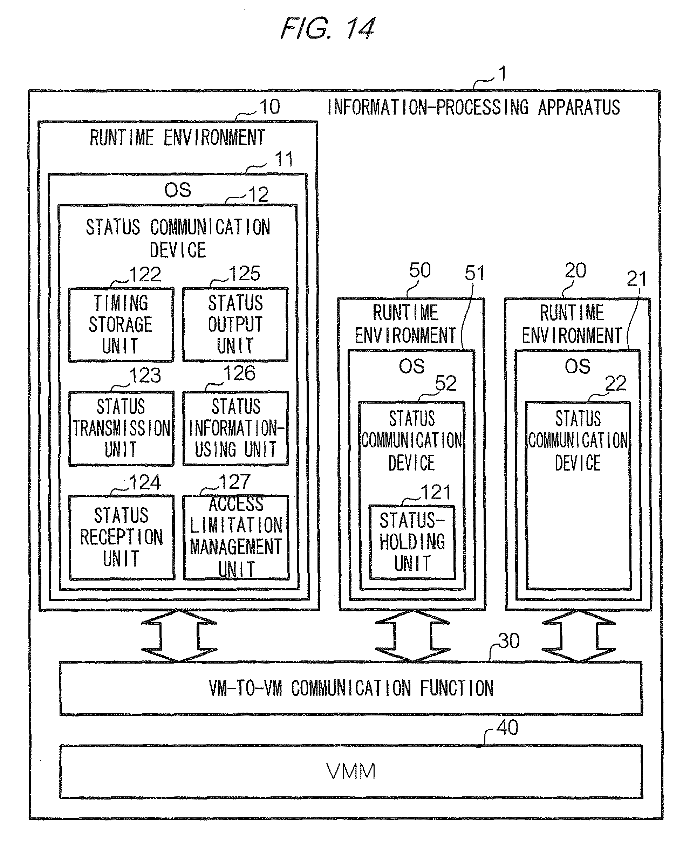

FIG. 14 is a diagram showing a functional configuration of information-processing apparatus 1 according to Modification 1 (details of status communication device 22 are not shown). In this example, information-processing apparatus 1 includes runtime environment 50 in addition to runtime environment 10 and runtime environment 20. Runtime environment 10 and runtime environment 20 operate such that one of them is in the foreground status and the other is in the background status, while runtime environment 50 is always in the background status. In this example, OS 51 operates in runtime environment 50, and status communication device 52 operates under OS 51. Status communication device 52 includes status-holding unit 121. Status communication device 12 on runtime environment 10 does not include status-holding unit 121. When it is desired that a functional element of status communication device 12 access status-holding unit 121, it accesses runtime environment 50 using VM-to-VM communication function 30. It is to be noted that the allocation of functions to runtime environment 10 and runtime environment 50 is not limited to that shown exemplarily in FIG. 14. The functions of status communication device 12 may be allocated to runtime environment 10 and runtime environment 50 in any manner. Further, runtime environment 50 may be a runtime environment whose status can switch to the foreground status.

### 3-2. Modification 2

The relationship between runtime environment 10 and runtime environment 20 is not limited to that described in the exemplary embodiment. Runtime environment 20 may operate in runtime environment 10.

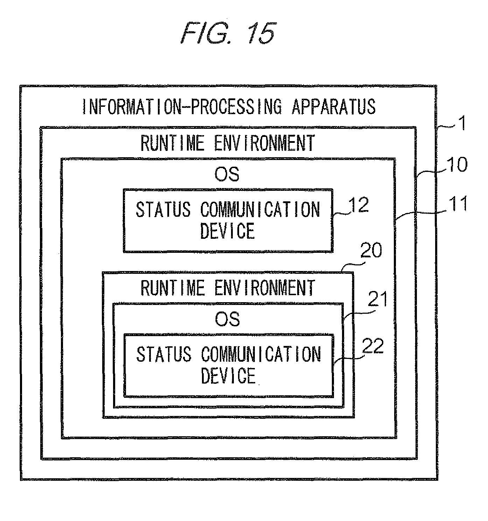

FIG. 15 is a diagram showing a functional configuration of information-processing apparatus 1 according to Modification 2. In this example, runtime environment 10 and runtime environment 20 have a relationship in that OS 11 is a host OS and OS 21 is a guest OS. OS 21 is caused to operate under OS 11 by an application program for generating a virtual machine. This application program also allows for communication between runtime environment 10 and runtime environment 20. A way of communication of status information is the same as that described in the exemplary embodiment. It is to be noted that the relationship between the host OS and the guest OS is not limited to that shown exemplarily in FIG. 15. The relationship may be such that OS 21 is a host OS and OS 11 is a guest OS.

### 3-3. Modification 3

The condition for transmission of status information is not limited to that described in the exemplary embodiment. Any condition may be used so long as it includes a condition relating to a status of execution of a target runtime environment, which is one of runtime environment 10 and runtime environment 20 that is of interest in defining the condition. Besides the condition described already in the exemplary embodiment, any of the following conditions may be used, for example, as a condition relating to the status of execution of the target runtime environment. Each of these conditions may be used separately, or may be used in combination with another one of the conditions. In the following examples, the target runtime environment is the runtime environment of the transmission source.
(1) Status information is transmitted when the runtime environment of the transmission source is in the background status.
(2) Status information is transmitted when the runtime environment of the transmission source has switched from the foreground status to the background status.
(3) With regard to a status type whose degree of priority is high, status information is transmitted irrespective of the status of execution of the runtime environment of the transmission source.
(4) With regard to a status type whose degree of priority is low, status information is transmitted when the runtime environment of the transmission source is in the background status.
(5) With regard to a status type whose degree of priority is low, transmission is performed when the runtime environment of the transmission source has switched from the foreground status to the background status. In cases (3)-(5), each data set stored in timing storage unit 122 includes a degree of priority of a respective status type.
(6) With regard to status information relating to the information presentation status, transmission is not performed when the runtime environment of the transmission source is in the foreground status.
(7) With regard to status information relating to the information presentation status, transmission is performed when the runtime environment of the transmission source is in the background status.
(8) With regard to status information relating to the information presentation status, transmission is performed when the runtime environment of the transmission source has switched from the foreground status to the background status.
(9) Status information is transmitted after the runtime environment of the transmission source has switched from the foreground status to the background status.

The above conditions (1)-(9) are examples in a case that the target runtime environment is the runtime environment of the transmission source. However, the target runtime environment may be the runtime environment of the transmission destination. In such a case, condition (1) should be read as "status information is transmitted when the runtime environment of the transmission destination is in the foreground status," for example. The same applies to conditions (2)-(9).

In addition to the condition relating to the status of execution of the target runtime environment, other conditions that are unrelated to the status of execution may be used. Following are examples of such a condition.
(10) With regard to status information relating to the setting status, transmission is performed immediately when the information is input, irrespective of the status of execution of the target runtime environment. With regard to status information relating to the information presentation status, transmission is performed depending on the status of execution of the target runtime environment. Namely, based on the classification or the type of the status information, switching is made between the transmission performed depending on the status of execution of the target runtime environment and the transmission performed irrespective of the status of execution of the target runtime environment.
(11) Status information is transmitted when an amount of status information stored in status-holding unit 121 (a number of data sets or a data size) exceeds a threshold value. In this case, status-holding unit 121 stores a threshold value relating to the amount of status information (e.g., an upper limit of a number of data sets=3, an upper limit of the data size=1kB).
(12) When status information included in one data set is transmitted, status information included in another data set is transmitted at the same time.
(13) When a request is received from another program or another device, status information is transmitted in response to the request.
(14) Status information is transmitted when a predetermined period of time has passed after the previous transmission of status information. In this case, status-holding unit 121 stores a time at which the previous transmission of status information is performed together with a time interval for transmission of status information.
(15) Transmission is performed when a problem occurs in the runtime environment of the transmission destination or when the runtime environment of the transmission destination is initialized. In this case, status-holding unit 121 acquires information indicating that a problem has occurred in the runtime environment of the transmission destination or that the runtime environment of the transmission destination has been initialized.
(16) Transmission is performed when a runtime environment serving as a master runtime environment is started up. For example, in a case where secure runtime environment 20 is a master runtime environment, specified status information is transmitted to runtime environment 10 when runtime environment 20 is started up. In this case, timing storage unit 122 stores information for determining a runtime environment serving as a master runtime environment and status information to be transmitted, and, based on the information stored in timing storage unit 122, status transmission unit 123 determines the runtime environment serving as a master runtime environment and the status information to be transmitted. Alternatively, status transmission unit 123 may acquire information for determining a runtime environment serving as a master runtime environment and status information to be transmitted from outside of runtime environment 10, such as from VMM 40.
(17) Transmission is performed when setting information or the like is reset in the runtime environment of the transmission destination. For example, when the setting information is reset to an initial value in runtime environment 20, status transmission unit 223 transmits specified status information to runtime environment 10.

Further, the condition for determining whether, when new status information is input, to transmit the status information immediately, as is described with reference to steps S105 and S106 in FIG. 7, is not limited to that described in the exemplary embodiment. This condition may be a condition relating to the classification or the type of the status information. For example, the condition may set forth that transmission of the status information is performed immediately if the status type is "email arrival" and is not performed immediately if the status type is other than "email arrival ."

### 3-4. Modification 4

The assignment of functions to the functional elements of status communication device 12 is not limited to that described in the exemplary embodiment. For example, in the exemplary embodiment, explanation is made of an example in which status transmission unit 123 has functions of acquiring a status of execution of the runtime environment of the transmission source and determining whether the condition stored in timing storage unit 122 is fulfilled. However, another functional element may have a part of these functions. Essentially, the assignment of functions to the functional elements may be arbitrary, so long as status communication device 12 as a whole has the functions described in the exemplary embodiment.
Further, a part of the functions of status communication device 12 may be omitted. For example, status communication device 12 does not have to include a function relating to the access limitation or a function of using the status information. The same applies to status communication device 22.
In this connection, a process of a part of the flow shown in FIGS. 7-12 may be omitted.

### 3-5. Modification 5

The way of use of a screen in the foreground status and in the background status is not limited to that exemplarily shown in FIGS. 13A, and 13B. In a multi-window system, it is possible to display a window for the runtime environment in the foreground status at the forefront, instead of the entire screen being used for displaying a picture relating to the runtime environment in the foreground status.

### 3-6. Modification 6

The process of detecting the switching of the status of execution (step S201) is not limited to that described in the exemplary embodiment. Status transmission unit 123 may acquire the status of execution of runtime environment 10 from a function (a program or a device) having information on the status of execution of runtime environment 10. In this case, status transmission unit 123 stores an identifier (a program name, an IP address, or the like) of the function to be referred to regarding the status of execution. Status transmission unit 123 issues a query on the status of execution of runtime environment 10 to the stored reference. Upon receipt of the query, the program or the device returns a reply including the status of execution of the runtime environment to status transmission unit 123. Status transmission unit 123 acquires the status of execution from this reply. For example, in a case where information-processing apparatus 1 has a function of controlling switching of display unit (display) 140 between runtime environments, and this controlling function stores an identifier of a runtime environment in the foreground status, status transmission unit 123 may acquire the status of execution from this switching-controlling function.

### 3-7. Modification 7

The policy relating to the access limitation is not limited to that described in the exemplary embodiment. In the example shown in FIG 5, the policy sets forth limitations at the time of reception, at the time of transmission, and at the time of use. However, a part of them may be omitted from the policy. For example, the policy may include only the limitation at the time of transmission.

### 3-8. Modification 8

The status information is not limited to that described in the exemplary embodiment. For example, the status information may include information that, when the runtime environment in the foreground status has been switched, indicates whether the switching was performed in response to a user operation or in response to a system event. The status information may include information indicating that a user has performed a specific operation, that a specific item in a menu is selected, that communication has occurred, that specific information is displayed, and so on. These items of status information can be acquired by hooking execution of these processes, for example.

### 3-9. Modification 9

Status communication device 12 and status communication device 22 each may have an inspection means for inspecting the received status information. The inspection here is conducted to find whether a value of the status information is within a normal range, whether the status information is in a correct format, and whether the status information includes an illegal string of characters, for example. In this case, status output unit 125 and status output unit 225 output the status information that has passed the inspection.

### 3-10, Modification 10

The hardware configuration for implementing the functions shown in FIG. 1 is not limited to that explained with reference to FIG. 6. For example, in place of a general-purpose CPU, a processor adapted for performing a specific process(es) may be used.
In the above embodiment, a program executed by CPU 111 may be stored in a computer-readable storage medium such as a magnetic storage medium (a magnetic tape, a magnetic disk (an HDD, an FD (Flexible Disk)), or the like), an optical storage medium (an optical disk (a CD (Compact Disk), a DVD (Digital. Versatile Disk)), or the like), a magneto-optical storage medium, a semiconductor memory (a flash ROM or the like), and so on. The program also may be downloaded via a network such as the Internet.

### 3-11. Modification 11

The access limitation described in 2-2 relating to the exemplary embodiment may include a limitation based on security levels of the runtime environments. For example, access limitation management unit 127 may set forth a policy that transmission of an item of status information from runtime environment 10 to runtime environment 20 is prohibited if runtime environment 20 is non-secure compared to runtime environment 10. In a case where there are one or more additional runtime environments in addition to runtime environment 20, access limitation management unit 127 may set forth a policy that transmission of an item of status information is prohibited from runtime environment 10 to any runtime environment that is non-secure compared to runtime environment 10.

### 3-12. Modification 12

In the exemplary embodiment, the policy of access limitation is changed by access limitation management unit 127 of status communication device 12 operating in runtime environment 10 in response to a request by another program or device. However, a change in the policy of access limitation may be allowed only when the request is made by a runtime environment that is secure compared to runtime environment 10.

## Claims

1. An information-processing apparatus comprising:
an environment storage unit that stores a set of instructions for implementing a plurality of runtime environments including a first runtime environment and a second runtime environment;
an execution means that executes the set of instructions stored in the environment storage means, with a status of execution of one of the plurality of runtime environments being a foreground status and a status of execution of each of the other runtime environment(s) being a background status;
a status-holding means that stores an item(s) of status information to be transmitted from the first runtime environment to the second runtime environment;
a timing storage means that stores a condition relating to a status of execution of a target runtime environment, which is one of the first runtime environment and the second runtime environment; and
a transmission means that transmits the item(s) of status information stored in the status-holding means to the second runtime environment in a case where the condition stored in the timing storage means is fulfilled.

2. The information-processing apparatus according to claim 1,
wherein
the target runtime environment is the first runtime environment, and the condition includes a condition that the status of execution of the target runtime environment is the background status or has switched from the foreground status to the background status.

3. The information-processing apparatus according to claim 1 or 2, further comprising:
a reception means that receives the item(s) of status information from the first runtime environment; and
an output means that outputs the item(s) of status information received by the reception means.

4. The information-processing apparatus according to any one of claims 1 to 3,
wherein
each of the item(s) of status information is classified into one of a plurality of types,
the target runtime environment is the first runtime environment,
the timing storage means stores information representing a degree of priority for each of the plurality of types, and
the condition includes a condition that, with respect to a type whose degree of priority is high, the item(s) of status information is transmitted irrespective of the status of execution of the target runtime environment, and with respect to a type whose degree of priority is low, the item(s) of status information is transmitted when the status of execution of the target runtime environment is the background status or has switched from the foreground status to the background status.

5. The information-processing apparatus according to any one of claims 1 to 4,
wherein
the status-holding means stores a plurality of data sets,
each of the plurality of data sets includes an item of status information and a flag corresponding to the item of status information,
upon input of a new item of status information, the status-holding means writes the new item of status information to the data sets,
after writing of the new item of status information to the data sets, the status-holding means rewrites a flag corresponding to the written item of status information to indicate that the item of status information has not been transmitted yet,
when performing the transmission, the transmission means extracts, from among the item(s) of status information stored in the status-holding means, an item(s) of status information whose corresponding flag indicates that the item of status information has not been transmitted yet, and transmits the extracted item(s) of status information, and
the status-holding means rewrites the flag corresponding to each of the item(s) of status information transmitted by the transmission means such that the flag indicates that the corresponding item of status information has been transmitted.

6. The information-processing apparatus according to any one of claims 1 to 5,
wherein
each of the item(s) of status information is classified into one of a plurality of statuses including an information presentation status relating to information presentation,
the target runtime environment is the first runtime environment, and the condition includes a condition that in a case where any of the item(s) of status information relates to the information presentation status, transmission of the item of status information is not performed when the status of execution of the target runtime environment is the foreground status, and transmission of the item of status information is performed when the status of execution of the target runtime environment is the background status or has switched from the foreground status to the background status.

7. The information-processing apparatus according to any one of claims 1 to 6,
wherein
the target runtime environment is the first runtime environment, and the condition includes a condition that transmission of the item(s) of status information is performed after the status of execution of the target runtime environment has switched from the foreground status to the background status.

8. The information-processing apparatus according to any one of claims 1 to 7,
wherein the condition includes a condition that transmission of the item(s) of status information is performed when an amount of the item(s) of status information stored in the status-holding means exceeds a threshold value.

9. The information-processing apparatus according to any one of claims 1 to 8,
wherein the condition includes a condition that, when one item of status information is transmitted, another item of status information is transmitted.

10. The information-processing apparatus according to any one of claims 1 to 9,
wherein the transmission means transmits the item(s) of status information in response to a request from the second runtime environment or another device.

11. The information-processing apparatus according to any one of claims 1 to 10,
wherein
the status-holding means stores a plurality of data sets,
each of the plurality of data sets includes an item of status information and a status type representing a type of the item of status information,
the apparatus includes an access limitation management means that stores a policy indicating, for each of the status types, whether to permit transmission of a corresponding item of status information, and
the transmission means processes the item(s) of status information according to the policy stored in the access limitation management means.

12. The information-processing apparatus according to any one of claims 1 to 10, further comprising an access limitation management means that stores a policy including, for each of the plurality of runtime environments other than the first runtime environment, first information indicating whether the runtime environment is secure or non-secure as compared to the first runtime environment, and second information indicating that transmission of an item of status information from the first runtime environment to a runtime environment that is indicated by the first information as being non-secure is prohibited,
wherein the transmission means processes the item(s) of status information according to the policy stored in the access limitation management means.

13. The information-processing apparatus according to claim 1,
wherein the first runtime environment is less secure than the second runtime environment,
a first status communication device including the status-holding means, the timing storage means, and the transmission means operates in the first runtime environment,
the item(s) of status information transmitted by the transmission means relates to setting of the information-processing apparatus,
a second status communication device operates in the second runtime environment, and
the second status communication device includes a second reception means that receives the item(s) of status information transmitted from the first runtime environment and a second output means that outputs the item(s) of status information received by the second reception means to a program that makes the setting in the second runtime environment.

14. An information-processing method performed in an information-processing apparatus comprising: a storage means that stores a set of instructions for implementing a plurality of runtime environments including a first runtime environment and a second runtime environment and a condition relating to a status of execution of a target runtime environment, which is one of the first runtime environment and the second runtime environment; and an execution means that executes the set of instructions stored in the storage means, with a status of execution of one of the plurality of runtime environments being a foreground status and a status of execution of each of the other runtime environment(s) being a background status,
the method comprising the steps of:
causing, by the execution means, the storage means to store an item of status information to be transmitted from the first runtime environment to the second runtime environment; and
transmitting, by the execution means, the item of status information stored in the storage means to the second runtime environment in a case where the condition stored in the storage means is fulfilled.

15. A program for causing a computer to execute an information-processing method, the computer serving as an information-processing apparatus comprising: a storage means that stores a set of instructions for implementing a plurality of runtime environments including a first runtime environment and a second runtime environment and a condition relating to a status of execution of a target runtime environment, which is one of the first runtime environment and the second runtime environment; and an execution means that executes the set of instructions stored in the storage means, with a status of execution of one of the plurality of runtime environments being a foreground status and a status of execution of each of the other runtime environment(s) being a background status,
the method comprising the steps of:
causing, by the execution means, the storage means to store an item of status information to be transmitted from the first runtime environment to the second runtime environment; and
transmitting, by the execution means, the item of status information stored in the storage means to the second runtime environment in a case where the condition stored in the storage means is fulfilled.
